Europäisches Patentamt

European Patent Office

Office européen des brevets

(11) Veröffentlichungsnummer: **0 442 362 A2**

# EUROPÄISCHE PATENTANMELDUNG

(21) Anmeldenummer: **91101570.9**

(22) Anmeldetag: **06.02.91**

(51) Int. Cl.⁵: **C09D 5/44**

(30) Priorität: **12.02.90 AT 308/90**

(43) Veröffentlichungstag der Anmeldung:
**21.08.91 Patentblatt 91/34**

(84) Benannte Vertragsstaaten:
**BE CH DE ES FR GB GR IT LI NL SE**

(71) Anmelder: **Vianova Kunstharz Aktiengesellschaft**

**A-8402 Werndorf(AT)**

(72) Erfinder: **Paar, Willibald, Dr.**
**Schanzelgasse 19**
**A-8010 Graz(AT)**

(54) **Verfahren zur Herstellung von kationischen Lackbindemitteln zur Formulierung von Pigmentpasten für kathodisch abscheidbare Elektrotauchlacke.**

(57) Die Erfindung betrifft ein Verfahren zur Herstellung von kationischen Lackbindemitteln, welche besonders zur Formulierung von Pigmentpasten für kathodisch abscheidbare Elektrotauchlacke geeignet sind.

Die erfindungsgemäß hergestellten Lackbindemittel sind modifizierte Epoxidharz-Amin-Addukte, die Titan in organisch-chemischer Bindung enthalten.

Auch ohne Mitverwendung von bleihaltigen Verbindungen und/oder Bleipigmenten zeigen die gehärteten Lackfilme einen ausgezeichneten Korrosionsschutz auf nicht vorbehandeltem Stahlblech.

EP 0 442 362 A2

# VERFAHREN ZUR HERSTELLUNG VON KATIONISCHEN LACKBINDEMITTELN ZUR FORMULIERUNG VON PIGMENTPASTEN FÜR KATHODISCH ABSCHEIDBARE ELEKTROTAUCHLACKE.

Die Erfindung betrifft ein Verfahren zur Herstellung von kationischen Lackbindemitteln, welche besonders zur Formulierung von Pigmentpasten für kathodisch abscheidbare Elektrotauchlacke geeignet sind. Auch ohne Mitverwendung von bleihaltigen Verbindungen und/oder Bleipigmenten zeigen die gehärteten Lackfilme einen ausgezeichneten Korrosionsschutz auf nicht vorbehandeltem Stahlblech.

In der Lackindustrie ist es allgemein üblich, bei der Herstellung von pigmentierten Lacken die Pigmente in einem Teil des zur Verwendung gelangenden Bindemittels oder in speziellen Bindemitteln (Pastenharzen) zu vermahlen. Zur Erzielung einer ausreichenden Korrosionsbeständigkeit auf nicht vorbehandeltem Stahlblech ist es notwendig, Bleiverbindungen und/oder Bleipigmente einzusetzen, die in den meisten Fällen gemeinsam mit den anderen Pigmenten und Füllstoffen in diese Pastenharze eingearbeitet werden.

Alle derzeit für diesen Zweck eingesetzten Bleiverbindungen haben jedoch in kathodisch abscheidbaren Elektrotauchlacken wesentliche Nachteile. Die als feste Stoffe eingesetzten Bleiverbindungen (Bleioxid bzw. basisches Bleisilikat) werden erst im Lack gelöst. Die Lacke bedürfen daher längerer Homogenisierungszeiten, bis die entsprechende Wirksamkeit des Bleisalzes als Katalysator gegeben ist. Die dabei gebildeten wasserlöslichen Salze befinden sich - ebenso wie andere dem Lack unmittelbar zugesetzte wasserlösliche Salze - zu einem wesentlichen Teil nicht in der Harzmicelle, sondern in der wäßrigen Phase des Lackes. Sie werden bei der elektrischen Abscheidung durch den im Film auftretenden Endosmoseeffekt, welcher eine Entwässerung des Filmes bewirkt, aus dem Film ausgewaschen oder auf das Substrat als metallischer Niederschlag abgeschieden. Gelöste Salze können überdies anteilig durch die bei Elektrotauchlackieranlagen eingesetzten Dialysevorrichtungen aus dem Bad entfernt und gegebenenfalls bei den Spülvorgängen in unkontrollierter Weise wieder ins Bad rückgeführt werden.

Die nichtwasserlöslichen Bleisalze längerkettiger Fettsäuren sind im Harz löslich und verbleiben daher weitgehend in der Harzmicelle. Durch Hydrolyse entstehen jedoch titrierbare Mengen an wasserunlöslichen Fettsäuren, durch welche das Abscheidungsverhalten der Lackfilme und die Badführung bei der Elektrotauchlackierung erheblich gestört werden.

Die Verwendung von Bleiverbindungen in Lacken wird überdies in zunehmendem Maße von der Industrie aufgrund der Toxizität dieser Verbindungen und der damit verbundenen Entsorgungsprobleme abgelehnt. Andererseits stellt jedoch der ausreichende Blankblechkorrosionsschutz eine unabdingliche Forderung der Verbraucher kathodisch abscheidbarer Elektrotauchlacke, insbesonders in der Automobilindustrie, dar.

In der EP 336 283 A2 werden basische Organotitanatverbindungen als Zusatzmittel für kathodisch abscheidbare Lacksysteme beschrieben, wodurch der Blankblechkorrosionsschutz wesentlich verbessert wird. Diese Methode erfordert jedoch die Herstellung und Lagerhaltung einer zusätzlichen Lackkomponente. Ein Anreiben von Pigmenten in derartigen Zusatzmitteln ist wegen der ausgeprägten Strukturviskosität dieser Verbindungen nicht möglich.

Die EP 347 785 A2 betrifft kathodisch abscheidbare Elektrotauchlacke, die als Bindemittel Kombinationen von kationischen filmbildenden Harzen mit organischen Titanverbindungen aufweisen, wobei letztere durch Umsetzung eines Tetraalkylorthotitanats und/oder eines Titanacetylacetonats mit NH-funktionellen $\beta$-Hydroxyalkylaminen und anschließender Reaktion mit Formaldehyd erhalten wurden.

Es wurde nun gefunden. daß auf dem Prinzip des in der EP 347 785 A2 angeführten Reaktionsablaufs kationische Lackbindemittel zur Formulierung von Pigmentpasten für kathodisch abscheidbare Elektrotauchlacke hergestellt werden können, wenn spezifisch aufgebaute Epoxidharz-Amin-Addukte als Ausgangsverbindungen verwendet werden.

Die Erfindung betrifft ein Verfahren zur Herstellung von kationischen, nach teilweiser oder vollständiger Neutralisation wasserverdünnbaren Lackbindemitteln, welche besonders zur Formulierung von Pigmentpasten für kathodisch abscheidbare Elektrotauchlacke geeignet sind, auf der Basis von modifizierten Epoxidharz-Amin-Addukten, welches dadurch gekennzeichnet ist, daß man 1,0 Mol einer Diepoxidverbindung mit einem Epoxidäquivalentgewicht von 150 bis 500 mit 0,5 bis 1,5 Mol, vorzugsweise 0,8 bis 1,2 Mol, eines sekundären Monoamins und/oder einer Monocarbonsäure und/oder eines Monophenols bei 70 bis 120 ˚C bis zum Verbrauch der entsprechenden Äquivalente an Epoxidgruppen umsetzt, anschließend dieses Zwischenprodukt mit 0,5 bis 1,5 Mol, vorzugsweise 0,8 bis 1,2 Mol, eines primär-tertiären Alkylendiamins bei 60 bis 80 ˚C zu einer epoxidgruppenfreien sekundären $\beta$-Hydroxyalkylaminverbindung umsetzt und diese Verbindung mit einem Tetraalkylorthotitanat und/oder einem Titanacetylacetonat bei 60 bis 120 ˚C und anschließend mit Formaldehyd bei 80 bis 100 ˚C unter Entfernung des entstandenen Alkohols und/oder Acetylacetons reagieren läßt, mit der Maßgabe, daß der Titangehalt des Bindemittels, berechnet als Metall und bezogen auf Festharz, 1,0 bis 5,0 Gew.-%, vorzugsweise 2,0 bis 4,0 Gew.-%, beträgt.

Die Erfindung betrifft weiters die Verwendung der erfindungsgemäß hergestellten Lackbindemittel zur Formulierung von Pigmentpasten für bleifreie, kathodisch abscheidbare Elektrotauchlacke.

Die Verwendung der erfindungsgemäß hergestellten Pastenharze bietet den Vorteil, daß das katalytisch wirksame Titan in das Bindemittelsystem integriert ist.

Zur Herstellung der Epoxidharz-Amin-Addukte werden Diepoxidverbindungen mit einem Epoxidäquivalentgewicht von 150 bis 500 eingesetzt. Es werden die handelsüblichen Epoxidharze auf Basis von Bisphenol A und Bisphenol F oder entsprechende Diepoxide auf aliphatischer Basis, wie auf Basis von Polypropylenglykol, sowie Mischungen dieser Produkte verwendet.

Geeignete sekundäre Monoamine sind Alkylamine, wie die Dibutylamine und deren Homologe; als Monocarbonsäuren werden vorzugsweise solche mit einem höheren Aliphatenanteil, wie Isononansäure oder Leinölfettsäure eingesetzt; auch beim Einsatz von Monophenolen ist ein aliphatischer Rest, wie bei Nonylphenol, von Vorteil.

Bevorzugt eingesetzte primär-tertiäre Alkylendiamine sind das N,N'-Dimethylaminopropylamin und homologe Verbindungen.

Als Titanverbindung werden Tetraalkylorthotitanate oder Titanacetonylacetonate der Formel $Ti(O\text{-}alkyl)_n$-(acetylacetonat)$_2$ (n = 0 oder 2), wie sie im Handel erhältlich sind, verwendet. Bevorzugt werden Titanverbindungen eingesetzt, in welchen der Alkylrest ein Butylrest ist.

Die Herstellung der Bindemittel erfolgt zunächst durch Umsetzung der Diepoxidverbindung mit dem sekundären Monoamin und/oder der Monocarbonsäure und/oder dem Monophenol bei 70 bis 120 °C bis zum Verbrauch der entsprechenden Äquivalente an Epoxidgruppen. Anschließend wird, gegebenenfalls nach Zusatz geeigneter Lösungsmittel, bei 60 - 80 °C das primär-tertiäre Alkylendiamin angelagert. Die weitere Umsetzung mit dem Tetraalkylorthotitanat oder dem Titanacetylacetonat erfolgt unter Abtrennung des entstehenden Alkohols und/oder Acetylacetons bei 60 bis 120 °C. Anschließend wird Formaldehyd, vorzugsweise in Form des Paraformaldehyds, zugegeben und das Reaktionsgemisch bis zur völligen Homogenisierung auf einer Temperatur von 80 bis 100 °C gehalten. Schließlich erfolgt die Entfernung des bei der Reaktion mit der N-Methylolgruppe entstehenden Alkohols oder Acetylacetons.

Bei der Herstellung des Epoxidharz-Amin-Adduktes wird 1,0 Mol der Diepoxidverbindung, d.h. 2.0 Mol Epoxidgruppen, mit 0,5 bis 1,5 Mol, vorzugsweise 0.8 bis 1,2 Mol, der monofunktionellen Verbindung und mit 0,5 bis 1,5 Mol, vorzugsweise 0,8 bis 1,2 Mol, des Diamins zu einer epoxidgruppenfreien sekundären β-Hydroxyalkylaminverbindung umgesetzt.

Die Titanverbindung wird in einer Menge eingesetzt, daß das Bindemittel einen Titangehalt, berechnet als Metall und bezogen auf Festharz, von 1,0 bis 5,0 Gew.-% aufweist. Vorzugsweise liegt dieser Bereich zwischen 2,0 und 4,0 Gew.-%.

Die erfindungsgemäß hergestellten Bindemittel werden in bekannter Weise mit Pigmenten, Füllstoffen, Farbstoffen und gegebenenfalls anderen Lackadditiven zu Pigmentpasten verarbeitet. Für die Herstellung dieser Pigmentpasten werden die üblichen Misch- und Reibaggregate, wie Dissolver, Sand-, Perl- oder Kugelmühlen oder Walzenreibgeräte verwendet.

Die Pigmentpasten werden dann mit der Klarlackkomponente aufgelackt, sodaß ein Lack mit dem gewünschten Pigment-Bindemittelverhältnis resultiert. Die aus den erfindungsgemäß hergestellten Pastenharzen gefertigten Pigmentpasten eigenen sich aufgrund ihres hohen Pigmentanteils insbesonders für das 2-Komponenten-Nachsetz-Verfahren beim Betrieb von K-ETL-Becken, sowie zur Herstellung von Lackformulierungen mit niedrigen Anteilen an organischen Hilfslösungsmitteln.

Zur Erzielung praxisgerechter Ergebnisse müssen die Lacke einen Titangehalt, berechnet als Metall und bezogen auf das gesamte Lackbindemittel als Festharz, von 0,03 bis 3 Gew.-%, vorzugsweise von 0,1 bis 1,0 Gew.-%, aufweisen. Gegebenenfalls kann der aus der Pigmentpaste stammende Titananteil im Elektrotauchlack durch untergeordnete Zusätze von geeigneten Titanverbindungen, z.B. entsprechend der EP 336 283 A2, weiter erhöht werden.

Die folgenden Beispiele sollen die Erfindung näher erläutern, ohne daß dadurch ihr Umfang beschränkt wird. Alle Mengen- und Prozentangaben beziehen sich, soweit nichts anderes angegeben ist, auf Gewichtsteile bzw. Gewichtsprozente.

Beispiel 1 (Pastenharz 1 = PH1): In einem geeigneten Reaktionsgefäß werden 380 Tle eines Bisphenol A-Diglycidylethers (Epoxidäquivalentgewicht 190, entsprechend 2,0 Mol freier Epoxidgruppen) bei 110 °C mit 242 Tlen (1,1 Mol) Nonylphenol in bekannter Weise bis zu einem Epoxidäquivalentgewicht von 190 umgesetzt. Die Reaktionsmischung wird mit 180 Tlen Ethylenglykolmonobutylether verdünnt und mit 117 Tlen (0,9 Mol) Diethylaminopropylamin versetzt. Anschließend wird auf 70 °C gekühlt und diese Temperatur bis zum vollständigen Verbrauch aller Epoxidgruppen gehalten. Das so erhaltene Zwischenprodukt wird mit 170 Tlen (0,5 Mol) Tetrabutyltitanat bei 100 °C unter Abspaltung und Entfernung von 74 Tlen (1,0 Mol) Butanol umgesetzt. Es werden 30 Tle (0,9 Mol) Paraformaldehyd, 91 %, zugegeben und nochmals 67 Tle (0,9 Mol)Butanol destillativ unter reduziertem Druck entfernt. Das resultierende Produkt hat einen Titangehalt von 3,1 % (Metall), bezogen auf Bindemittelfestkörper, und es wird mit Methoxypropanol auf einen Festkörpergehalt von 75 % verdünnt.

Beispiel 2 (Pastenharz 2 = PH2): In gleicher Weise, wie in Beispiel 1 beschrieben, wird aus 640 Tlen Polypropylenglykoldiglycidylether (Epoxidäquivalentgewicht 320, entsprechend 2,0 Mol Epoxidgruppen), 127 Tlen Dibutylamin (1,0 Mol), 102 Tlen Dimethylaminopropylamin (1,0 Mol), 170 Tlen Titan-(0-Butyl)-(acetylacetonat)$_2$ (0,5 Mol) und 33 Tlen (1,0 Mol) Paraformaldehyd, 91 %, ein Pastenharz mit einem Titangehalt von 2,7 Gew.-% hergestellt. Zur weiteren Verarbeitung wird das Produkt mit Methoxypropanol auf einen Festkörpergehalt von 80 % verdünnt.

Beispiel 3 (Pastenharz 3 = PH3): Wie oben beschrieben, wird ein Pastenharz aus 380 Tlen Bisphenol A-Diglycidylether (Epoxidäquivalentgewicht 190, entsprechend 2 Mol Epoxidgruppen), 151 Tlen Isononansäure (0,9 Mol), 143 Tlen Diethylaminopropylamin (1,1 Mol), 187 Tlen Tetrabutyltitanat (0,55 Mol) und 36 Tlen Paraformaldehyd, 91 % (1,1 Mol) hergestellt, welches einen Titangehalt von 3,6 Gew.-% aufweist. Die Verdünnung erfolgt mit Ethoxypropanol auf einen Festkörpergehalt von 70 %.

Prüfung der erfindungsgemäß hergestellten Bindemittel als Pigmentpastenharze in Kombination mit kathodisch abscheidbaren Bindemitteln

Die Bindemittel werden mit der in der Tab. 1 angegebenen Menge an organischem Hilfslösungsmittel bzw. mit dem Neutralisationsmittel versetzt und homogen vermischt. Das Vermahlen der Pigmente mit dieser Harzlösung erfolgt in üblicher Weise in einer Perlmühle.

Die Einarbeitung der Pigmente kann auch in wäßriger Phase erfolgen (Paste D).

Die so hergestellten Pigmentpasten werden mit 20%igen wäßrigen Klarlacken verschiedener kathodisch abscheidbarer Elektrotauchlackbindemittel (KTL-Bindemittel) vermischt und 24 Stunden homogenisiert. Art und Menge der Lackkomponenten sind in der Tabelle 2 zusammengefaßt. Die Angaben für die Teile Bindemittel und Pigmentpaste beziehen sich auf den Feststoffgehalt.

In der Tabelle 2 sind auch die Bedingungen der Abscheidung (Spannung in Volt bei einer Abscheidungszeit von 90 Sekunden bei 30° C) auf nichtvorbehandeltes (I) bzw. zinkphosphatiertes Stahlblech (II), sowie die Prüfergebnisse aus dem Salzsprühtest nach ASTM B 117 - 73 (auf nicht vorbehandeltem Stahlblech) und dem Wechseltest nach VDA 621 - 415 (auf phosphatiertem Stahlblech) zusammengefaßt.

Die Herstellung der bei der Prüfung eingesetzten kathodisch abscheidbaren Elektrotauchlackbindemittel wird im Anschluß an die Tabelle 2 beschrieben.

4

EP 0 442 362 A2

**Tabelle 1**

| Paste | Pastenharz (fest) | Zusätzliches Hilfs- lösemittel* | Neutralisation (xx) | Farbruß | Pigmente Al-Silikat- Pigment | Titan- dioxid | Pigm. BM Verh. | Fest- körper Gew.-% |
|---|---|---|---|---|---|---|---|---|
| A | 100 (PH1) | BG | 60 AS | 16 | 184 | – | 2:1 | 60 |
| B | 100 (PH1) | BG | 70 ES | 3 | – | 297 | 3:1 | 65 |
| C | 100 (PH2) | MP | 50 AS | 10 | 60 | 30 | 1:1 | 63 |
| D | 100 (PH2) | W | 100 AS | 32 | 80 | 288 | 4:1 | 54 |
| E | 100 (PH3) | MP | 60 ES | 16 | 184 | – | 2:1 | 60 |
| F | 100 (PH3) | BG | 60 ES | 2 | – | 198 | 2:1 | 62 |
| G | 100 (PH3) | MP | 50 AS | 10 | 60 | 30 | 1:1 | 58 |

\*     zur Erreichung des angegebenen Endfestkörpergehaltes

(xx)   Millimol pro 100 g Festharz

| | |
|---|---|
| BG | Ethylenglykolmonobutylether |
| MP | Methoxypropanol |
| AS | Ameisensäure |
| ES | Essigsäure |
| W | Wasser |

## Tabelle 2

| Lack | 1 | 2 | 3 | 4 | 5 | 6 | 7 | 8 | 9 | 10 | V1 | V2 |
|---|---|---|---|---|---|---|---|---|---|---|---|---|
| KTL-Bindemittel Tle | BM1 80 | BM1 70 | BM2 80 | BM2 85 | BM2 80 | BM3 60 | BM3 90 | BM3 70 | BM4 70 | BM4 75 | BM2 100 | BM3 100 |
| Neutralisation Ameisen- säure Millimol/100 g | 40 | 45 | 40 | 40 | 45 | 35 | 40 | 40 | 60 | 55 | 45 | 45 |
| Pigmentpaste Tle | A 60 | B 90 | E 60 | B 60 | F 60 | G 80 | D 50 | B 90 | C 60 | F 75 | -- | -- |
| Pigment/BM-Verh. | 0,4:1 | 0,6:1 | 0,4:1 | 0,45:1 | 0,4:1 | 0,4:1 | 0,4:1 | 0,6:1 | 0,3:1 | 0,5:1 | 0,4:1 | 0,3:1 |
| Ti-Gehalt Gew.-% Festharz | 0,62 | 0,93 | 0,74 | 0,47 | 0,74 | 1,46 | 0,27 | 0,93 | 0,81 | 0,93 | -- | -- |
| Lack-Fest- körpergehalt Gew.-% | 20 | 17 | 18 | 18 | 18 | 22 | 19 | 20 | 20 | 18 | 18 | 18 |
| Volt bei Abscheidung | | | | | | | | | | | | |
| I | 200 | 180 | 210 | 190 | 200 | 240 | 220 | 200 | 180 | 220 | 220 | 200 |
| II | 260 | 240 | 270 | 250 | 280 | 300 | 280 | 240 | 250 | 270 | 280 | 280 |
| Salzsprühtest(1) ASTM B 117-73 | 1,0 | 1,2 | 0,9 | 1,8 | 0,6 | 0,5 | 1,7 | 1,0 | 0,9 | 1,2 | 9,0 | 2,3 |
| VDA-Wechseltest(2) | 2,1 | 1,7 | 1,5 | 1,6 | 1,8 | 0,9 | 1,8 | 1,2 | 2,0 | 2,0 | 4,2 | 2,8 |

(1) Angriff am Kreuzschnitt in mm nach 240 Stunden (beidseitig vom Schnitt)
(2) mm Unterwanderung nach 10 Runden (beidseitig vom Schnitt)

Herstellung der in den Beispielen eingesetzten KTL-Bindemittel

BM 1:

700 Tle B 180 **) werden in bekannter Weise in Gegenwart von 0,5 Tlen Diphenylparaphenylendiamin (Inhibitor) bei 200° C mit 100 Tlen Maleinsäureanhydrid so lange reagiert, bis dieses vollständig gebunden ist. Nach Kühlen auf 100° C werden 130 Tle 2-Ethylhexanol zugesetzt und bei 120° C bis zum Erreichen der theoretischen Säurezahl des Halbesters verestert.

110 Tle Halbester (entsprechend ca. 0,12 COOH-Gruppen) werden mit 212 Tlen eines Bisphenol A-Diepoxidharzes (Epoxidäquivalentgewicht ca. 190) in 80%iger Lösung in Diethylenglykoldimethylether bei 120° C bis zu einer Säurezahl von praktisch Null umgesetzt. Nach Zusatz von 108 Tlen Diethylenglykoldimethylether, 59 Tlen Diethylaminopropylamin (0,45 Mol) und 59 Tlen 2-Ethylhexylamin (0,45 Mol) wird der Ansatz bei 65 bis 70° C bis zu einem Epoxidwert von praktisch Null reagiert. Nach Erreichen dieses Wertes werden 114 Tle Bisphenol A (0,5 Mol) und 50 Tle Paraformaldehyd, 91 % (1,5 Mol) zugegeben und die Reaktion bei 60° C bis zum Erreichen eines Gehaltes an freiem Formaldehyd von 0,5 bis 1 % geführt. Der Festkörpergehalt des erhaltenen Bindemittels beträgt 77 %.

BM 2:

Es werden in einem geeigneten Reaktionsgefäß 220 Tle Nonylphenol (1 Mol) mit 130 Tlen Diethylaminopropylamin (1 Mol) und 100 Tlen Toluol auf 75° C erwärmt und dem Ansatz anschließend unter leichtem Kühlen 33 Tle Paraformaldehyd, 91 % (1 Mol) zugefügt. Die Temperatur wird langsam gesteigert, bis sich eine zügige azeotrope Destillation einstellt. Nach Abtrennen von 21 Tlen Reaktionswasser wird das Toluol im Vakuum abdestilliert und das Produkt in 167 Tlen Diethylenglykoldimethylether gelöst.

Es wird die so erhaltene Lösung bei 30 bis 40° C unter Kühlung mit 304 Tlen (1,0 Mol) eines mit 2-Ethylhexanol halbblockierten Toluylendiisocyanats versetzt und die Temperatur von 40° C 1,5 Stunden bis zu einem NCO-Wert von praktisch 0 gehalten.

Anschließend werden 475 Tle eines Epoxidharzes auf Basis von Bisphenol A (Epoxidäquivalentgewicht 475) in 200 Tlen Propylenglykolmonomethylether gelöst und nach Zusatz von 835 Tlen des oben hergestellten Vorproduktes wird bei 95 bis 100° C bis zu einem Epoxidwert von praktisch 0 reagiert. Der resultierende Festkörpergehalt beträgt 70 %.

BM 3:

500 Tle eines Epoxidharzes auf Basis von Bisphenol A (Epoxidäquivalentgewicht ca. 500) werden in 214 Tlen Propylenglykolmonomethylether gelöst und bei 110° C mit 83 Tlen eines Halbesters aus Phthalsäureanhydrid und 2-Ethylhexanol in Gegenwart von 0,5 Tlen Triethylamin als Katalysator bis zu einer Säurezahl von weniger als 3 mg KOH/g reagiert. Dann werden 120 Tle eines NH-funktionellen Oxazolidins aus Aminoethylethanolamin, 2-Ethylhexylacrylat und Formaldehyd, sowie 26 Tle Diethylaminopropylamin zugefügt. Der Ansatz wird bei 80° C bis zu einem Epoxidwert von praktisch 0 reagiert und mit 200 Tlen Propylenglykolmonomethylether verdünnt.

70 Tle (Festharz) dieses oxazolidinmodifizierten Epoxidharz-Aminadduktes werden mit 30 Tlen (Festharz) der nachfolgend beschriebenen Vernetzungskomponente 30 Minuten bei 50° C homogenisiert. Der Festkörpergehalt der Bindemittelmischung beträgt 66 %.

Die Vernetzungskomponente wird durch Umsetzung von 1 Mol eines mit 2-Ethylhexanol halbblockierten Toluylendiisocyanats mit 0,33 Mol Triethanolamin hergestellt. Die Reaktion erfolgt in 70%iger Lösung in Diethylenglykoldimethylether bei 50 bis 60° C bis zur vollständigen Umsetzung der Isocyanatgruppen.

BM 4:

In einem mit Rührer, Thermometer und Rückflußkühler ausgestatteten Reaktionsgefäß werden 1000 Tle eines Epoxidharzes auf Basis von Bisphenol A (Epoxidäquivalentgewicht ca. 500) in 492 Tlen Ethylglykolacetat bei 60 bis 70° C gelöst, 0,2 Tle Hydrochinon und 144 Tle Acrylsäure zugegeben und die Temperatur auf 100 bis 110° C gesteigert. Die Reaktion wird bei dieser Temperatur bis zu einer Säurezahl von unter 5 mg KOH/g geführt. Anschließend wird das Reaktionsprodukt bei 60 bis 70° C mit 652 Tlen eines Monoisocyanates aus 1 Mol Toluylendiisocyanat und 1 Mol Diethylethanolamin (70%ig in Methylisobutylketon) versetzt und bis zu einem NCO-Wert von praktisch Null reagiert. Der resultierende Festkörpergehalt beträgt 70 %.

**) B 180 ist ein flüssiges Polybutadienöl (ca. 75 % 1,4-cis-, ca. 24 % 1,4-trans- und ca. 1 % Vinyldoppelbindungen; Molekulargewicht ca. 1500 ± 15 %; Jodzahl ca. 450 g / 100 g).

Als Vergleichsbeispiele werden die Bindemittel BM 2 und BM 3 in ihrer lösungsmittelhältigen Form pigmentiert, und zwar in folgender Zusammensetzung:

für BM 2:

100 Tle Festharz werden mit 1 Tl Farbruß und 39 Tlen Titandioxid versetzt und auf einem geeigenten Anreibaggregat homogenisiert.

für BM 3:

Die Pigmentierung erfolgt durch Zugabe von 2 Tlen basischem Bleisilikat, 2 Tlen Farbruß und 26 Tlen Titandioxid zu 100 Tlen Festharz.

**Patentansprüche**

1.  Verfahren zur Herstellung von kationischen, nach teilweiser oder vollständiger Neutralisation wasserverdünnbaren Lackbindemitteln, welche besonders zur Formulierung von Pigmentpasten für kathodisch abscheidbare Elektrotauchlacke geeignet sind, auf der Basis von modifizierten Epoxidharz-Amin-Addukten, dadurch gekennzeichnet, daß man 1,0 Mol einer Diepoxidverbindung mit einem Epoxidäquivalentgewicht von 150 bis 500 mit 0,5 bis 1,5 Mol, vorzugsweise 0,8 bis 1,2 Mol, eines sekundären Monoamins und/oder einer Monocarbonsäure und/oder eines Monophenols bei 70 bis 120°C bis zum Verbrauch der entsprechenden Äquivalente an Epoxidgruppen umsetzt, anschließend dieses Zwischenprodukt mit 0,5 bis 1,5 Mol, vorzugsweise 0,8 bis 1,2 Mol, eines primär-tertiären Alkylendiamins bei 60 bis 80°C zu einer epoxidgruppenfreien sekundären β-Hydroxyalkylaminverbindung umsetzt und diese Verbindung mit einem Tetraalkylorthotitanat und/oder einem Titanacetylacetonat bei 60 bis 120°C und anschließend mit Formaldehyd bei 80 bis 100°C unter Entfernung des entstandenen Alkohols und/oder Acetylacetons reagieren läßt, mit der Maßgabe, daß der Titangehalt des Bindemittels, berechnet als Metall und bezogen auf Festharz, 1,0 bis 5,0 Gew.-%, vorzugsweise 2,0 bis 4,0 Gew.-%, beträgt.

2.  Verfahren nach Anspruch 1, dadurch gekennzeichnet, daß man als Titanverbindung Tetrabutyltitanat und oder Titan-(0-butyl)₂-(acetylacetonat)₂ einsetzt.

3.  Verwendung der nach den Ansprüchen 1 und 2 hergestellten Lackbindemittel zur Formulierung von Pigmentpasten für bleifreie, kathodisch abscheidbare Elektrotauchlacke.

4.  Kathodisch abscheidbare Elektrotauchlacke, enthaltend 0,03 bis 3 Gew.-%, vorzugsweise von 0,1 bis 1 Gew.-%, Titan (berechnet als Metall und bezogen auf das Gesamtlackbindemittel als Festharz), welches zur Gänze oder zum überwiegenden Teil an ein Bindemittel nach den Ansprüchen 1 und 2 gebunden ist.